# EUROPEAN PATENT APPLICATION

(11) **EP 4 567 430 A1**
(43) Date of publication of application: **11.06.2025**
(21) Application number: 23214015.2
(22) Date of filing: 04.12.2023
(51) Int. Cl.: G01N 35/04

(54) **LABORATORY SAMPLE CONTAINER CARRIER, LABORATORY SAMPLE CONTAINER TRANSPORT DEVICE, LABORATORY SAMPLE CONTAINER ALIGNMENT STATION, AND LABORATORY SAMPLE CONTAINER TRANSPORT SYSTEM**

(71) Applicant: Roche Diagnostics GmbH, 68305 Mannheim (DE)
(72) Inventor: Zoelch, Benjamin, 71638 Ludwigsburg (DE)
(74) Representative: Patentanwälte Ruff, Wilhelm, Beier, Dauster & Partner mbB

(57) **Abstract**

The invention relates to a laboratory sample container carrier (1) for a laboratory sample container transport device (20), the laboratory sample container carrier (1) comprising a sample container holder (2), the sample container holder (2) being adapted to accept a laboratory sample container (T) at least partially or only partially, a carrier base (3) for rotatably bearing the sample container holder (2), and a magnetic lock (4) for rotation-locking the sample container holder (2) relative to the carrier base (3), the magnetic lock (4) being controllable dependent on an external magnetic control field.

## Description

The invention relates to a laboratory sample container carrier for a laboratory sample container transport device, and to a laboratory sample container transport device having at least one such laboratory sample container carrier. Furthermore, the invention relates to a laboratory sample container alignment station for aligning a laboratory sample container carried by a laboratory sample container carrier of the afore-mentioned kind. Moreover, the invention relates to a laboratory sample container transport system for transporting laboratory sample containers, the laboratory sample container transport system having both a laboratory sample container transport device and a laboratory sample container alignment station of the afore-mentioned kind.

Typically, pre-analytic laboratory systems are adapted to process samples contained by laboratory sample containers. Therein, such a pre-analytic system usually comprises a number of processing stations between which the laboratory sample containers are to be transported. For transporting the laboratory sample containers between the processing stations, the pre-analytic system usually has a laboratory sample container transport system. Conventionally, the laboratory sample container transport system has a number of sample container holders for accepting a respective laboratory sample container, the sample container holders being non-rotationally mounted to a conveyor belt of the laboratory sample container transport system. In particular, the sample container holders and the sample containers held by the sample container holders are conventionally not, in particular rotationally, adjustable with the conveyor belt standing still. Typically, the laboratory sample containers are equipped with a respective barcode, the barcode being present at a circumferential surface of the respective laboratory sample container. Within conventional laboratory sample container transport systems, alignment of the barcodes of the laboratory sample containers held by the sample container holders is usually impossible without previously parting the laboratory sample containers from the sample container holders, in particular by lifting the laboratory sample containers axially out of the sample container holders. For parting a respective laboratory sample container from a respective sample holder, the laboratory sample transport system may conventionally comprise a gripping device. The gripping device may therein be adapted to adjust a gripped laboratory sample container which was previously parted from the respective sample holder relative to a bar code reader of the laboratory sample container transport system, in particular independently of said sample container holder. Such a parting of the laboratory sample containers from the sample container holders, however, can induce a risk of spillage of the sample contained by the respective laboratory sample container. Therein, the risk of sample spillage may come along with a risk of cross-contamination between different samples to be processed.

It is an object of the present invention to provide for a laboratory sample container carrier, for a laboratory sample container transport device, for a laboratory sample container alignment station, and for a laboratory sample container transport system, each having improved properties. In particular, a risk of sample spillage upon laboratory sample container alignment is to be reduced.

This object is solved by the subject-matter of the independent claims. Preferred embodiments are subject-matter of the dependent claims.

A laboratory sample container carrier according to the invention is adapted for use in a laboratory sample container transport device. The laboratory sample container carrier comprises a sample container holder. The sample container holder is adapted to accept a laboratory sample container at least partially or only partially, in particular axially. Such a laboratory sample container can be a sample tube. A sample can be stored within the laboratory sample container. The sample to be stored within the laboratory sample container can be contained by said laboratory sample container. The sample may be a portion of a sample liquid, for example a blood sample.

The laboratory sample container carrier according to the invention comprises a carrier base for rotatably bearing the sample container holder. In particular, the carrier base rotatably bears the sample container holder so that the sample container holder and a laboratory sample container held by the sample container holder are rotatable together relative to the carrier base. The sample container holder can be adapted to accept the laboratory sample container so that the accepted laboratory sample container is non-rotationally, in particular axially removably, held at the accepting sample container holder. In particular, the sample container holder is radially and/or axially nested by the carrier base.

The laboratory sample container carrier according to the invention comprises a magnetic lock for rotation-locking the sample container holder relative to the carrier base. It is to be understood that the sample container holder may only be rotatable relative to the carrier base if not rotation-locked by the magnetic lock. The magnetic lock can offer a quick, robust and easy solution for, in particular temporarily, rotation-locking the sample container holder to the carrier base. Whereas the unlocked sample container holder may offer free rotation of the laboratory sample container held by said sample container holder, the locked sample container holder may allow for avoidance of any rotational movement of the laboratory sample container relative to the carrier base. The magnetic lock is controllable dependent on an external magnetic control field. In case the magnetic lock is controlled so that the sample container holder is not rotation-locked relative to the carrier base, the sample container holder and therewith a respective laboratory sample container held by said sample container holder can be adjusted together rotationally, e. g. relative to a code reader of a superordinate laboratory sample container transport system. The code reader may be adapted for reading a code of the laboratory sample container held by the sample container holder. The code may be present at a circumferential surface of the laboratory sample container. In particular, the sample container holder is adapted to accept the laboratory sample container so that the code of the laboratory sample container is readable, in particular by the code reader. In particular, the afore-described rotational adjustment does not require parting the laboratory sample container from the sample container holder.

In particular, the laboratory sample container carrier according to the invention enables gripperless rotational alignment of the accepted laboratory sample container together with the accepting sample holder. Thus, no gripping force may be required to directly act on the laboratory sample container itself upon adjustment. Instead, to rotationally adjust the laboratory sample container, force may only be applied to the sample container holder of the laboratory sample container carrier. Therefore, a risk of damaging the, in particular circumferentially arranged, code of the laboratory sample container during alignment can be nullified. Since conventionally required parting of the laboratory sample container from the laboratory sample container carrier upon code reading may accordingly be rendered obsolete, particularly fast processing times and particularly low risk of sample spillage can be achieved.

According to an embodiment of the invention, the magnetic lock has a locking mode and an unlocking mode. In locking mode, the sample container holder is locked relative to the carrier base. In unlocking mode, the sample container holder is, in particular freely, rotatable relative to the carrier base. In particular, the magnetic lock is controllable dependent on the external magnetic control field as to switch between the locking mode and the unlocking mode. In particular, the locking mode is active if the unlocking mode is inactive, and the unlocking mode is active in reach of the external magnetic control field. The magnetic lock may exclusively be either in its locking mode or in its unlocking mode. In particular, while the laboratory sample container accepted by the sample container holder is transported, due to movement of the laboratory sample container carrier as a whole, the magnetic lock is in its locking mode. According to another embodiment of the invention, the magnetic lock is auto-resetting to locking mode. This can mean, that the magnetic lock self-resets to its locking mode, if being out of reach of the external magnetic control field, and/or in absence of the external magnetic control field. In particular, the magnetic lock may be auto-resetting to locking mode by gravity and - in addition, or as an alternative - a spring load.

According to another embodiment of the invention, the magnetic lock comprises at least one magnetic element. Such a magnetic element can be ferromagnetic and/or permanent-magnetic. Therein, the magnetic element is movable relative to the carrier base dependent on the external magnetic control field. In addition, or as an alternative, the magnetic element is movable relative to the sample container holder dependent on the external magnetic control field. In particular, at least a portion of the magnetic element is cylindrical. In addition, or as an alternative, at least a portion of the magnetic element can be tapered. In addition, or as an alternative, at least a portion of the magnetic element can be spherical. In particular, the magnetic element can be a magnetic bolt or sphere.

According to another embodiment of the invention, the carrier base comprises a guide for movably guiding the magnetic element of the magnetic lock along a locking direction of the magnetic lock. In addition, or as an alternative, the sample container holder comprises a guide for movably guiding the magnetic element of the magnetic lock along a locking direction of the magnetic lock. The guide and the magnetic element both have a length with respect to the locking direction. The length of both the guide and the magnetic element may be measured in parallel to the locking direction. Therein, the length of the guide is at least the length of the magnetic element. In other words: The length of the guide is equal to or greater than the length of the magnetic element. In particular, the guide comprises a recess, in particular in form of a blind hole, for movably accepting the magnetic element. The magnetic element can be movably accepted by the recess of the guide.

According to another embodiment of the invention, the magnetic element is movable relative to the guide between a locking position for the locking mode of the magnetic lock and an unlocking position for the unlocking mode of the magnetic lock. If the magnetic lock is in its locking mode, the magnetic element may be in its locking position. Accordingly, the magnetic element can be in its unlocking position if the magnetic lock is in its unlocking mode. The sample container holder or the carrier base comprises an engagement contour. It is to be understood that only the sample container holder may comprise the engagement contour if the carrier base has the guide, or vice versa. Therein, the magnetic element only engages the engagement contour in the locking position. In particular, the magnetic element is partially engaging the engagement contour and partially engaging the guide in the locking position. For instance, in the unlocking mode, the magnetic elements can be pulled up and/or apart from the engagement contour, in particular with respect to gravity.

According to another embodiment of the invention, the engagement contour comprises a number of contour portions. Therein, the contour portions are distributed around a rotational axis of the sample container holder at a constant radial distance. In particular, the contour portions are distributed around the rotational axis circumferentially and - additionally, or alternatively - equidistantly. A circumferential distance between the contour portions of the engagement contour may define an alignment precision.

According to another embodiment of the invention, the laboratory sample container carrier comprises a number of magnetic locks. The number of magnetic locks can be one or two or three or more. Therein, the magnetic locks are distributed around the rotational axis of the sample container holder at a constant radial distance. In particular, the magnetic locks are distributed around the rotational axis circumferentially and - additionally, or alternatively - equidistantly. In particular, the magnetic locks are adapted to interact with a single, in particular common, engagement contour of the sample container holder and - additionally, or alternatively - of the carrier base, in particular at a time. If there is more than one magnetic lock, particularly reliable rotation-locking can be achieved.

A laboratory sample container transport device according to the invention is adapted to transport laboratory sample containers. Therein, the laboratory sample container transport device comprises at least one laboratory sample container carrier according to the invention as described above. In particular, the laboratory sample container transport device comprises a number of laboratory sample container carriers according to the invention. Thus, the afore-mentioned advantages of the laboratory sample container carrier according to the invention transfer to the laboratory sample container transport device according to the invention having at least one such laboratory sample container carrier. The laboratory sample container transport device comprises a driving device. The at least one laboratory sample container carrier is, in particular releasably, fastened to the driving device. By principle, the laboratory sample container carrier can be used in conjunction with any type of driving device. The driving device can be separate from the at least one laboratory sample container carrier as to extrinsically drive the laboratory sample container carrier. The driving device may be a conveying device. Preferably, the driving device has a drivable transportation belt. The transportation belt can form a closed ring or loop. In addition, or as an alternative, the driving device can be integrated into a, in particular single, laboratory sample container carrier as to intrinsically drive said laboratory sample container carrier.

A laboratory sample container alignment station according to the invention is adapted to, in particular rotationally, align a laboratory sample container carried by a laboratory sample container carrier according to the invention. The afore-mentioned advantages of a laboratory sample container carrier according to the invention can be exploited and - additionally, or alternatively - be amplified by interaction with the laboratory sample container alignment station according to the invention. The laboratory sample container alignment station comprises an electromagnet and/or a permanent magnet. The electromagnet and/or the permanent magnet is adapted to generate the external magnetic control field for controlling the magnetic lock of the laboratory sample container carrier. Furthermore, the laboratory sample container alignment station comprises a rotation drive. Therein, the rotation drive is adapted for rotating the sample container holder of the laboratory sample container carrier, in particular with the magnetic lock being controlled accordingly dependent on the external magnetic control field, so that the laboratory sample container accepted by the sample container holder rotates relative to the carrier base. The laboratory sample container accepted by the sample container holder may not be rotatable relative to said sample container holder, but only rotatable relative to carrier base together with said sample container holder.

According to an embodiment of the invention, the laboratory sample container alignment station comprises a code reader for reading a code of the laboratory sample container. The code reader can be a barcode reader. The code of the laboratory sample container can be barcode. The code can include information regarding personal data of a sample donor, a date of sampling, a date of processing, a type of sample, a type of the laboratory sample container, and/or alike. The rotation drive is adapted for rotating the sample container holder of the laboratory sample container carrier with respect to the carrier base of the laboratory sample container carrier so that the code of the laboratory sample container accepted by said sample container holder gets, in particular rotationally, aligned with the code reader. In particular, the rotation drive is adapted to directly rotate the sample container holder. The rotation drive may be adapted to directly rotate the sample container holder, in particular by mutual friction and/or by gearing engagement.

A laboratory sample container transport system according to the invention is adapted to transport laboratory sample containers. The laboratory sample container transport system may be used within a pre-analytic laboratory system comprising a number of laboratory stations, between which laboratory sample containers can be transported by the laboratory sample container transport system. The laboratory sample container transport system comprises a laboratory sample container transport device according to the invention as described above. Thus, the afore-mentioned advantages of the laboratory sample container transport device according to the invention transfer to the laboratory sample container transport system according to the invention having such a laboratory sample container transport device. Furthermore, the laboratory sample container transport system comprises a laboratory sample container alignment station according to the invention as described above. Thus, the advantages of the laboratory sample container alignment station according to the invention transfer to the laboratory sample container transport system having such a laboratory sample container alignment station. Moreover, the laboratory sample container transport system comprises a, in particular electronic, control unit. Therein, the control unit is adapted to control the laboratory sample container transport device and the laboratory sample container alignment station in mutual dependence. The control unit can be adapted to control the external magnetic field for controlling the magnetic lock.

In particular, only as soon as the laboratory sample container carrier reaches the laboratory sample container alignment station, the magnetic field is applied to the magnetic lock of said laboratory sample container. As soon as the magnetic lock is switched to its unlocking mode, the rotation drive unit may rotate the sample container holder together with the laboratory sample container until the code of the laboratory sample container is aligned and/or read. When the code is aligned, the magnetic field may be deactivated, thus, the magnetic lock may reset to

Further advantages and features of the invention arise from the claims as well as from the following description of preferred embodiments of the invention, which are depicted by the drawings. Therein, equal reference signs relate to equal or similar or functionally equal components.

It is to be understood that the features mentioned above as well as the features described below are not only usable in the stated combination, respectively, but also in other combinations or solely, without leaving the scope of the present invention.
- Fig. 1: schematically depicts, in a cross-sectional view, a laboratory sample container carrier according to an embodiment of the invention,
- Fig. 2: schematically illustrates, in a cross-sectional view, a laboratory sample container transport system according to an embodiment of the invention having a laboratory sample container alignment station according to an embodiment of the invention and having a laboratory sample container transport device according to an embodiment of the invention, the laboratory sample container transport device having the laboratory sample container carrier of fig. 1,

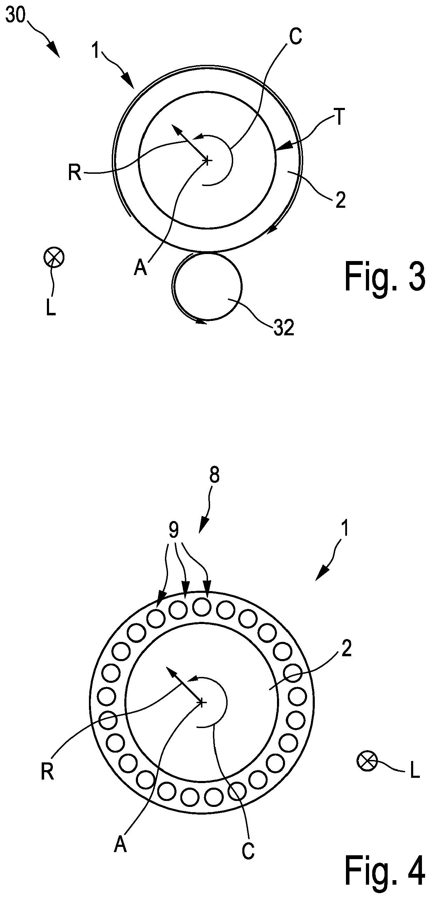

- Fig. 3: schematically illustrates, in a top view, another laboratory sample container alignment station according to another embodiment of the invention in interaction with another laboratory sample container carrier according to another embodiment of the invention,
- Fig. 4: schematically illustrates, in a top view, another laboratory sample container carrier according to another embodiment of the invention,
- Fig. 5: schematically illustrates, in a cross-sectional view, another laboratory sample container transport device according to another embodiment of the invention having another laboratory sample container carrier according to another embodiment of the invention, and
- Fig. 6: schematically illustrates, in a cross-sectional view, another laboratory sample container transport system according to another embodiment of the invention having another laboratory sample container alignment station according to another embodiment of the invention and having the laboratory sample container transport device of fig. 5.

A laboratory sample container transport system 40 according to the invention is adapted for transporting laboratory sample containers T. The laboratory sample container transport system 40 comprises a laboratory sample container transport device 20 according to the invention. Moreover, the laboratory sample container transport system 40 comprises a laboratory sample container alignment station 30 according to the invention. Furthermore, the laboratory sample container transport system 40 comprises a, e. g. electronic, control unit 41. The control unit 41 is adapted to control both the laboratory sample container transport device 20 and the laboratory sample container alignment station 30. Therein, the laboratory sample container transport device 20 and the laboratory sample container alignment station 30 are controllable by the control unit 41 in mutual dependence. For example, the laboratory container alignment station 30 and the laboratory sample container transport device 20 can be adapted to coordinatively and/or cooperatively interact, in particular due to being controlled by the control unit 41.

The laboratory sample container transport device 20 is adapted for transporting laboratory sample containers T. Therein, the laboratory sample container transport device 20 comprises at least one laboratory sample container carrier 1 according to the invention. For example, the laboratory sample container transport device 20 comprises several laboratory sample container carriers 1.

The laboratory sample container carrier 1 may be used in the laboratory sample container transport device 20. The laboratory sample container carrier 1 comprises a sample container holder 2. Therein, the sample container holder 2 is adapted to accept a laboratory sample container T at least partially or - as to be seen from the figures - only partially. For example, the sample container T is accepted by the sample container holder 2 so that a top section of the laboratory sample container T is positioned outside the sample container holder 2. The top section of the sample container T may have an opening through which a sample to be stored by the laboratory sample container T can be introduced. The opening can be closed by a detachable lid of the laboratory sample container T. A bottom section of the laboratory sample container T can be arranged opposite the top section and can have a bottom of the laboratory sample container T. If the laboratory sample container T is accepted by the sample container holder 2, the bottom of the laboratory sample container T can be in contact with the sample container holder 2.

The laboratory sample container 1 has a carrier base 3. The carrier base 3 is adapted for rotatably bearing the sample container holder 2. Thus, the sample container holder 2 can be rotatable relative to the carrier base 3. For example, the sample container holder 2 can be rotated relative to the carrier base 3 around a rotational axis A of the laboratory sample container carrier 1. The laboratory sample container T can be accepted by the sample container holder 2 along the rotational axis A, in particular in a direction of gravity.

The laboratory sample container carrier 1 comprises a magnetic lock 4. The magnetic lock 4 is adapted for rotation-locking the sample container holder 2 relative to the carrier base 3. It is to be understood that the sample container holder 2 is only rotatable relative to the carrier base 3, if the sample container holder 2 is not rotation-locked relative to the carrier base 3 by the magnetic lock 4. The magnetic lock 4 is controllable in dependence on an external magnetic control field. Thus, the magnetic lock 4 can be controlled by applying the external magnetic control field to the magnetic lock 4.

The laboratory sample container transport device 20 comprises a driving device 21. The carrier base 3 of the at least one laboratory sample container carrier 1 of the laboratory sample container transport device 20 is fastened to the driving device 21. For example, the carrier base 3 of the at least one laboratory sample container carrier 1 is releasably fastened to the driving device 21. The driving device 21 can have a drivable transportation belt 22 to which the at least one laboratory sample container carrier 1 is releasably fastened.

The laboratory sample container alignment station 30 is adapted for aligning a laboratory sample container T that is carried by the laboratory sample container carrier 1. Therein, the laboratory sample container alignment station 30 comprises an electromagnet or permanent magnet 31. The electromagnet or permanent magnet 31 is adapted to generate the external magnetic control field for controlling the magnetic lock 4 of the laboratory sample container carrier 1. In case the laboratory sample container alignment station 30 comprises an electromagnet, the external magnetic control field can be controlled by switching the electromagnet on or off. In case the laboratory sample container alignment station 30 comprises a permanent magnet 31, the external magnetic control field can be controlled by adjusting a distance between the laboratory sample container carrier 1 and the permanent magnet 31.

The laboratory sample container alignment station 30 comprises a rotation drive 32. Therein, rotation drive 32 is adapted for rotating the sample container holder 2 of the laboratory sample container carrier 1 with respect to the carrier base 3 of said laboratory sample container carrier 1. Therein, the sample container holder 2 can be rotated by the rotation drive 32 so that the laboratory sample container T accepted by the sample container holder 2 correspondingly rotates relative to the carrier base 3. The container holder 2 can be rotated relative to the carrier base 3 together with the laboratory sample container T that is, in particular circumferentially, held by said sample container holder 2 by the rotation drive 32.

For example, the laboratory sample container alignment station 30 comprises a code reader 33 for reading a code B of the laboratory sample container T. The code B can be present at an outer, in particular circumferential, surface of the laboratory sample container T. In particular, the code B can be present in the top section of the laboratory sample container T. For reading the code B, the code reader 33 can be adapted to, in particular optically, capture the code B, and to process the captured code B. The code B can be a barcode. The code reader 33 can be a barcode reader 34.

For example, the rotation drive 32 of the laboratory sample container alignment station 30 is adapted for rotating the sample container holder 2 of the laboratory sample container carrier 1 with respect to the carrier base 3 of said laboratory sample container carrier 1 so that the code B of the laboratory sample container T accepted by said sample container holder 2 gets aligned with the code reader 33. In particular, the rotation drive 32 is adapted for directly rotating the sample container holder 2. The rotation drive 32 can be adapted for directly friction-driving the sample container holder 2. The rotation drive 32 can have a rotatable wheel which rolls on an outer circumference of the sample container holder 2. The rotation drive 32 can be adapted to angularly adjust the sample container holder 2 relative to the carrier base 3, in particular with respect to the rotation axis A. Other possible torque transfer principles can also be used such as form fitting with any kind of cooperative toothing, friction enhancing with magnetic forces or rough surfaces, or rubber. Other options are bevel gears, worm drives or rack drives.

For example, the magnetic lock 4 of the laboratory sample container carrier 1 has a locking mode ML and an unlocking mode MU. By controlling the magnetic lock 4 in dependence on the external magnetic control field, the magnetic lock 4 can be switched between its locking mode ML and its unlocking mode MU. In the locking mode ML, the sample container holder 2 is locked relative to the base 3. The sample container holder 2 can be rotatable relative to the carrier base 3 in the unlocking mode MU.

For example, the magnetic lock 4 is designed so that the locking mode ML is active if the unlocking mode is inactive, the unlocking mode MU being, in particular exclusively, active in reach of the external magnetic control field. The magnetic lock 4 may be auto-resetting to locking mode ML. Thus, whenever the magnetic lock 4 is out of reach of the external magnetic control field, the magnetic lock 4 may be self-reset to locking mode ML. The magnetic lock 4 may be auto-resetting to locking mode ML either by gravity or a spring load. Optionally, the magnetic lock 4 may be auto-resetting to locking mode ML by both gravity and a spring load.

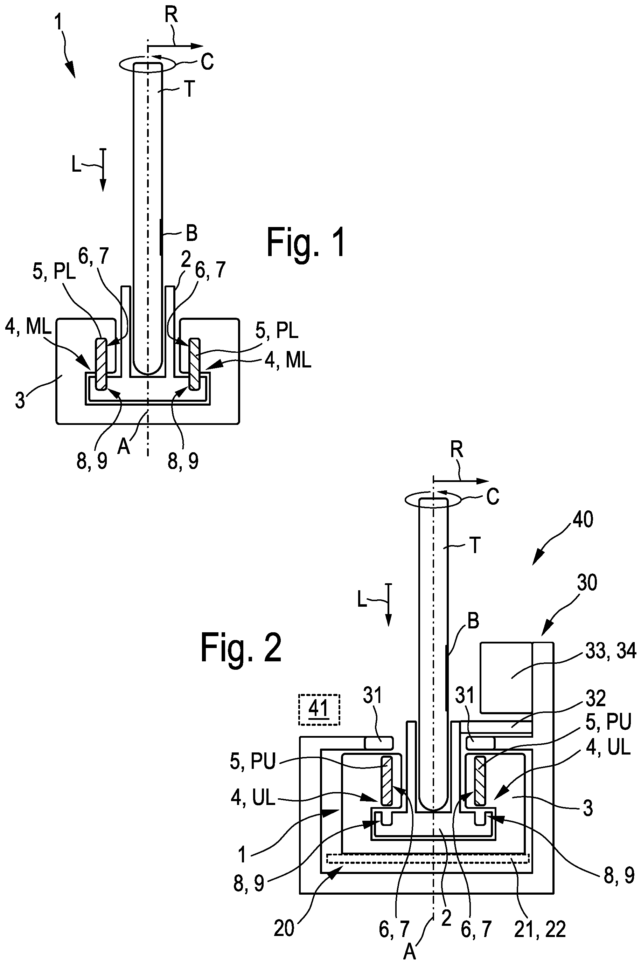

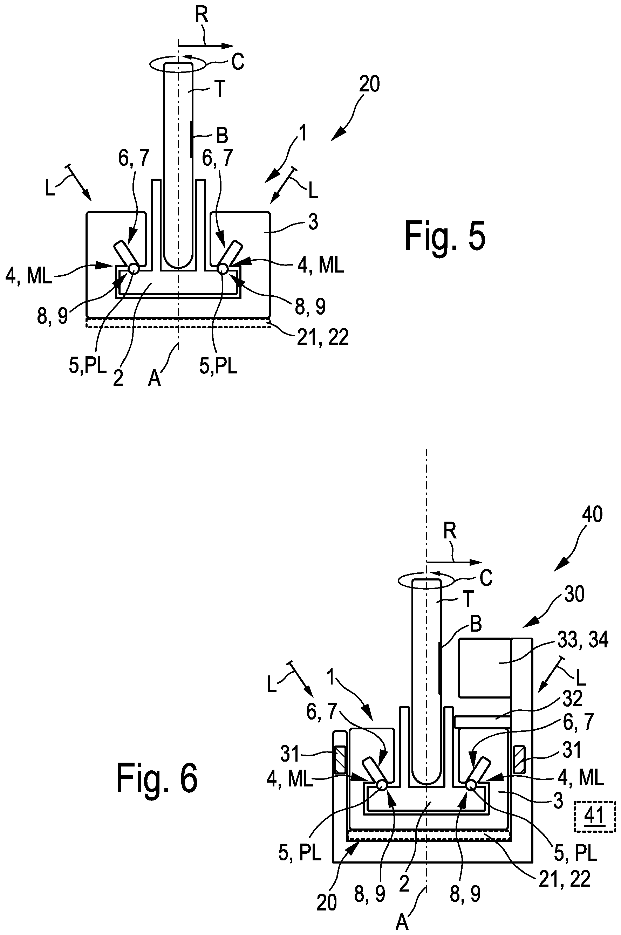

For example, the magnetic lock 4 comprises a magnetic element 5. The magnetic element 5 is movable relative to the carrier base 3 and - additionally, or alternatively - relative to the sample container holder 2 dependent on the external magnetic control field. At least a portion of the magnetic element 5 may be cylindrical and - additionally, or alternatively - tapered and - additionally, or alternatively - spherical. According to figs. 1 and 2, the magnetic element 5 is cylindrical, in particular bolt-shaped. According to the figs. 5 and 6, the magnetic element 5 is spherical. The magnetic element 5 may be supported by a spring, the spring being adapted to generate a spring load for the auto-resetting of the magnetic lock 4 to locking mode ML.

As to be seen from the figures, the laboratory sample container carrier 1 can comprise a number of magnetic locks 4. For example, the laboratory sample container carrier 1 can have two magnetic locks 4. Each of the magnetic locks 4 may have an own magnetic element 5.

For example, the magnetic locks 4 are distributed around the rotational axis A of the sample container holder 2 at a constant radial distance. Thus, the magnetic locks 4 can be distributed around the rotational axis A along a circumferential direction C of the sample container holder 2. A radial direction R of the laboratory sample container carrier 1 can be perpendicular to both the rotational axis A and the circumferential direction C. The magnetic locks 4 can be distributed around the rotational axis A. The magnetic locks 4 can be arranged equidistantly along the circumferential direction C. In the examples of the figures, the magnetic locks 4 are arranged diametrically opposite one another with respect to the rotation axis A.

For example, the carrier base 3 comprises a guide 6 for movably guiding the magnetic element 5 of the respective magnetic lock 4 along a locking direction L of said magnetic lock 4. Alternatively, the guide 6 may be present at the sample container holder 2. The guide 6 and the magnetic element 5 both have a length with respect to the locking direction L. Therein, the length of the guide 6 may be equal or greater than the length of the magnetic element 5. The guide 6 can comprise a recess 7 for movably accepting the magnetic element 5. In the example of the figures, one guide 6 comprising a recess 7 is present per magnetic lock 4, so to say per magnetic element 5 of the magnetic locks 4. The locking direction L may be parallel to the rotation axis A or, in particular, radially tilted relative to the rotation axis A.

For example, the magnetic element 5 is movable relative to the guide 6 between a locking position PL and an unlocking position PU. In locking mode ML, the magnetic element 5 is in its locking position PL. In unlocking mode MU, the magnetic element 5 is in its unlocking position PU. The locking position PL and the unlocking position PU may be arranged opposite one another along the locking direction L of the respective magnetic lock 4.

As to be seen from the figures, the sample container holder 2 may comprise an engagement contour 8. Therein, the respective magnetic element 5 only engages the engagement contour 8, if said magnetic element 5 is in its locking position PL. As an alternative regarding the examples of the figures, the engagement contour 8 may be present at the carrier base 3. According to the figures, the magnetic locks 4 of the laboratory sample container carrier 1 are adapted to interact with a shared single engagement contour 8 of the sample container holder 2 at a time.

The engagement contour 8 may comprise a number of contour portions 9. Therein, the contour portions 9 are distributed around the rotational axis A of the sample container holder 2, in particular along the circumferential direction C. The contour portions 9 are arranged at a constant radial distance relative to the rotational axis A. The contour portions 9 can be distributed around the rotational axis A circumferentially and - additionally, or alternatively - equidistantly.

## Claims

1. Laboratory sample container carrier (1) for a laboratory sample container transport device (20), the laboratory sample container carrier (1) comprising
- a sample container holder (2), the sample container holder (2) being adapted to accept a laboratory sample container (T) at least partially or only partially,
- a carrier base (3) for rotatably bearing the sample container holder (2), and
- a magnetic lock (4) for rotation-locking the sample container holder (2) relative to the carrier base (3), the magnetic lock (4) being controllable dependent on an external magnetic control field.

2. Laboratory sample container carrier (1) according to claim 1, **characterized in that**
- the magnetic lock (4) has a locking mode (ML) and an unlocking mode (MU), the sample container holder (2) being locked relative to the carrier base (3) in the locking mode (ML) and being rotatable relative to the carrier base (3) in the unlocking mode (MU),
- in particular the locking mode (ML) being active if the unlocking mode (MU) is inactive, and the unlocking mode (MU) being active in reach of the external magnetic control field.

3. Laboratory sample container carrier (1) according to claim 1 or 2, **characterized in that** the magnetic lock (4) is auto-resetting to locking mode (ML), in particular by gravity and/or a spring load.

4. Laboratory sample container carrier (1) according to any of the preceding claims, **characterized in that**
- the magnetic lock (4) comprises at least one magnetic element (5), the magnetic element (5) being movable relative to the carrier base (3) and/or the sample container holder (2) dependent on the external magnetic control field,
- in particular at least a portion of the magnetic element (5) being cylindrical and/or tapered and/or spherical.

5. Laboratory sample container (1) carrier according to any of the preceding claims, **characterized in that**
- the carrier base (3) or the sample container holder (2) comprises a guide (6) for movably guiding a magnetic element (5) of the magnetic lock (4) along a locking direction (L) of the magnetic lock (4),
- the guide (6) and the magnetic element (5) both having a length with respect to the locking direction (L), the length of the guide (6) being equal to or greater than the length of the magnetic element (5),
- in particular the guide (6) comprising a recess (7) for movably accepting the magnetic element (5).

6. Laboratory sample container carrier (1) according to claim 5, **characterized in that**
- the magnetic element (5) is movable relative to the guide (6) between a locking position (PL) for a locking mode (ML) of the magnetic lock (4) and an unlocking position (PU) for an unlocking mode (MU) of the magnetic lock (4),
- the sample container holder (2) or the carrier base (3) comprising an engagement contour (8), the magnetic element (5) only engaging the engagement contour (8) in the locking position (PL).

7. Laboratory sample container carrier (1) according to claim 6, **characterized in that**
- the engagement contour (8) comprises a number of contour portions (9), the contour portions (9) being distributed around a rotational axis (A) of the sample container holder (2) at a constant radial distance, in particular circumferentially and/or equidistantly.

8. Laboratory sample container carrier (1) according to any of the preceding claims, **characterized in that**
- the laboratory sample container carrier (1) comprises a number of magnetic locks (4), the magnetic locks (4) being distributed around a rotational axis (A) of the sample container holder (2) at a constant radial distance, in particular circumferentially and/or equidistantly,
- in particular the magnetic locks (4) being adapted to interact with a single engagement contour (8) of the sample container holder (2) and/or of the carrier base (3).

9. Laboratory sample container transport device (20) for transporting laboratory sample containers (T), the laboratory sample container transport device (20) comprising
- at least one laboratory sample container carrier (1) according to any of the preceding claims,
- a driving device (21), in particular having a drivable transportation belt (22), to which the carrier base (3) of the at least one laboratory sample container carrier (1) is fastened, in particular releasably.

10. Laboratory sample container alignment station (30) for aligning a laboratory sample container (T) carried by a laboratory sample container carrier (1) according to any of claims 1 to 8, the laboratory sample container alignment station (30) comprising
- an electromagnet or permanent magnet (31), the electromagnet or permanent magnet (31) being adapted to generate the external magnetic control field for controlling the magnetic lock (4) of the laboratory sample container carrier (1), and
- a rotation drive (32), the rotation drive (32) being adapted for rotating the sample container holder (2) of the laboratory sample container carrier (1) with respect to the carrier base (3) of the laboratory sample container carrier (1) so that the laboratory sample container (T) accepted by the sample container holder (2) rotates relative to the carrier base (3).

11. Laboratory sample container alignment station (30) according to claim 10, **characterized in that**
- the laboratory sample container alignment station (30) comprises a code reader (33), in particular a bar code reader (34), for reading a code (B), in particular a bar code, of the laboratory sample container (T),
- the rotation drive (32) being adapted for, in particularly directly, rotating the sample container holder (2) of the laboratory sample container carrier (1) with respect to the carrier base (3) of the laboratory sample container carrier (1) so that the code (B) of the laboratory sample container (T) accepted by said sample container holder (2) gets aligned with the code reader (33).

12. Laboratory sample container transport system (40) for transporting laboratory sample containers (T), the laboratory sample container transport system (40) comprising
- a laboratory sample container transport device (20), in particular according to claim 9, having a laboratory sample container carrier (1) according to any of claims 1 to 8,
- a laboratory sample container alignment station (30) according to claim 10 or 11, and
- a control unit (41), the control unit (41) being adapted to control the laboratory sample container transport device (20) and the laboratory sample container alignment station (30) in mutual dependence.
